**Europäisches Patentamt**

**European Patent Office**

**Office européen des brevets**

(11) Veröffentlichungsnummer: **0 459 011 A1**

# EUROPÄISCHE PATENTANMELDUNG

(21) Anmeldenummer: **90119280.7**

(22) Anmeldetag: **08.10.90**

(51) Int. Cl.⁵: **A47G  23/08**, F16M 11/08

(30) Priorität: **26.05.90 DE 9006002 U**

(43) Veröffentlichungstag der Anmeldung:
**04.12.91 Patentblatt  91/49**

(84) Benannte Vertragsstaaten:
**AT BE CH DE DK ES FR GB IT LI LU NL SE**

(71) Anmelder: **Grundmann, Ernst H.**
**Am Sportplatz 36a**
**W-4005 Meerbusch 2(DE)**

(72) Erfinder: **Grundmann, Ernst H.**
**Am Sportplatz 36a**
**W-4005 Meerbusch 2(DE)**

(74) Vertreter: **von Rohr, Hans Wilhelm, Dipl.-Phys.**
**et al**
**Patentanwälte Gesthuysen & von Rohr**
**Huyssenallee 15 Postfach 10 13 33**
**W-4300 Essen 1(DE)**

(54) **Drehtellereinrichtung.**

(57) Eine Drehtellereinrichtung für Audio- und/oder Videogeräte, Leuchtstrahler, Blumentöpfe, Ausstellungsgegenstände etc. mit einer auf einer Standfläche anzuordnenden, vorzugsweise kreisrunden Grundplatte (1) mit einer auf der Oberseite nahe dem Außenumfang verlaufenden, kreisrunden Lager-Laufbahn (2), mit einem auf der Lager-Laufbahn (2) angeordneten, konzentrischen insbesondere als Kugellagerring (3) ausgeführten Lagerring und mit einem konzentrisch zur Grundplatte (1) angeordneten, gegenüber der Grundplatte (1) um die gemeinsame Mittelachse drehbaren Drehteller (4) mit einer auf der Unterseite nahe dem Außenumfang verlaufenden, kreisrunden Lager-Laufbahn (5), ist dadurch gewichtsmäßig hoch belastbar und dennoch leicht und materialsparend ausgeführt, daß nahe der gemeinsamen Mittelachse der verschiedenen Teile eine zweite, zur Mittelachse konzentrische Anordnung aus an der Grundplatte (1) und dem Drehteller (4) angeordneten Lager-Laufbahnen (6, 7) und dazwischen angeordneten, insbesondere als Kugellagering (8) ausgeführtem Lagerring vorgesehen ist.

Fig.4

EP 0 459 011 A1

Die Erfindung betrifft eine Drehtellereinrichtung für Audio- und/oder Videogeräte, Leuchtstrahler, Blumentöpfe, Ausstellungsgegenstände etc. wie sie durch den Oberbegriff des Anspruchs 1 beschrieben ist.

Drehtellereinrichtungen der zuvor angesprochenen Art sind in verschiedenen Ausführungsformen seit langem bekannt. Bei der bekannten Drehtellereinrichtung, von der die Erfindung ausgeht (DE-A 3 246 835) ist die Grundplatte umgekehrt-topfförmig ausgeführt, d. h. sie bildet die Deckfläche eines topfförmigen Sockels. Das ist hier deswegen so vorgesehen, weil diese Drehtellereinrichtung für die Präsentation einer Torte, beispielsweise in einem Konditoreigeschäft bestimmt ist. Zwischen der kreisrunden Grundplatte und dem eigentlichen, kreisrunden Drehteller ist nahe dem Außenumfang ein Kugellagerring angeordnet, dem an den beiden genannten Teilen jeweils entsprechende Laufbahnen in dreidimensionaler Gestaltung, nämlich wannenförmig ausgeführt, zugeordnet sind. Der Kugellagerring besteht aus einem ringförmigen Kunststoff-Spritzgußteil, in dem Fassungen für Stahlkugeln ausgeformt sind. Schon durch diesen Kugellagerring und die dreidimensional ausgeformten Laufbahnen ist der Drehteller gegenüber der Grundplatte gegen ein seitliches Verschieben geschützt. Zusätzlich sind aber noch am Drehteller nahe der gemeinsamen Mittelachse nach unten vorspringende Nasen vorgesehen, die durch eine entsprechende Öffnung in der Grundplatte in die Ebene der Grundplatte axial hineinragen. Diese Nasen behindern aber das Abnehmen des Drehtellers von der Grundplatte nicht. Im übrigen weist der Drehteller einen außen umlaufenden, nach unten abragenden Rand auf, der ebenfalls dazu führt, daß ein seitliches Verschieben der beiden Teile gegeneinander nicht möglich ist. Im übrigen schützt dieser Rand auch den Kugellagerring gegen das Eindringen von Feuchtigkeit und/oder Schmutz.

Die zuvor beschriebene Drehtellereinrichtung ist gewichtsmäßig nicht besonders hoch belastbar. Soll sie gewichtsmäßig hoch belastbar sein, so muß die Material-Wandstärke insbesondere von Grundplatte und Drehteller groß gewählt werden. Das wiederum bedeutet ein hohes Gewicht der Drehtellereinrichtung, aber auch hohe Kosten, da viel Kunststoffmaterial eingesetzt werden muß. Eine solche Drehtellereinrichtung ist also insgesamt teuer. Sie muß außerdem zum Reinigen auseinandergenommen werden, was allerdings handhabungstechnisch nicht schwer ist, da der Drehteller ja nur lose auf der Grundplatte aufsitzt. Das wiederum ist aber auch ein Nachteil, da die Drehtellereinrichtung jedenfalls dann nicht als eine Einheit gehandhabt werden kann, wenn man, was eigentlich natürlich ist, die Drehtellereinrichtung am Drehteller anheben will.

Bei einer etwas anders aufgebauten, bekannten Drehtellereinrichtung (DE-A 3 410 087) ist die Laufbahn an der Grundplatte zu einzelnen Aufnahmen für Lagerkugeln geworden, der Kugellagerring ist also mit der an der Grundplatte vorhandenen Laufbahn einstückig ausgeführt. Entsprechendes könnte natürlich auch gegenüber am Drehteller als Alternative gelten. Auch hier sind die Laufbahnen für die Kugeln dreidimensional, hier nämlich im Querschnitt dreieckig ausgeführt. Die Grundplatte ist hier als ein kreisrunder, zur Mittelachse des Drehtellers konzentrischer, massiver Tragring ausgebildet, an dessen Oberseite die Aufnahmen für die Lagerkugeln ausgebildet sind. Am Innenumfang des Tragringes verteilt sind mehrere radial nach innen vorspringende, als federnde Rastelemente ausgeführte Nasen angeordnet, denen am Drehteller eine entsprechende, umlaufende Rastleiste zugeordnet ist. Die Rastleiste springt nach unten vom Drehteller in die Ebene der Grundplatte hinein axial vor und verhindert im Zusammenwirken mit den Nasen einerseits ein seitliches Verschieben der Teile gegeneinander, andererseits ein axiales Abheben des Drehtellers von der Grundplatte. Allerdings ist hier in beiden Richtungen ein wenig Spiel vorhanden, so daß die Drehbarkeit des Drehtellers auf der Grundplatte nicht behindert wird. An der Unterseite des die Grundplatte bildenden kreisrunden Tragringes ist eine Rundnut angeordnet, in die flächige Füße aus einem rutschfesten Material wie Gummi, Schaumstoff od. dgl. eingedrückt oder eingeklebt sind.

Der die Grundplatte der zuvor beschriebenen Drehtellereinrichtung bildende Tragring liegt radial etwa in der Mitte des Drehtellers. Dadurch hat die Gesamtanordnung bei außermittiger Belastung eine Kippneigung, die nachteilig ist. Außerdem besteht die Gefahr, daß bei starker Belastung am Außenumfang des Drehtellers der Drehteller am Außenumfang nach unten abgeknickt oder abgebogen wird. Um das zu verhindern, muß man bei betriebsmäßig zu erwartenden großen Belastungen auch hier große Materialstärken jedenfalls für den Drehteller realisieren. Auch diese Drehtellereinrichtung ist also nicht gleichzeitig gewichtsmäßig hoch belastbar und dennoch leicht und materialsparend ausführbar. Hinzu kommt, daß die Dreheigenschaften dieser Drehtellereinrichtung wegen der lediglich einseitig frei abrollenden Lagerkugeln nicht besonders gut sind, was ebenfalls wieder bei hoher Gewichtsbelastung besonders unangenehm zutage tritt.

Der Erfindung liegt die Aufgabe zugrunde, eine Drehtellereinrichtung der eingangs erläuterten Art anzugeben, die gewichtsmäßig hoch belastbar und dennoch leicht und materialsparend ausgeführt ist.

Die zuvor aufgezeigte Aufgabe ist bei einer Drehtellereinrichtung mit den Merkmalen des Oberbegriffs von Anspruch 1 durch die Merkmale des kennzeichnenden Teils von Anspruch 1 gelöst. Dabei ist festzuhalten, daß im Grundsatz auch bei der erfindungsgemäßen Drehtellereinrichtung der Kugellagerring mit einer der beiden Lager-Laufbahnen einstückig ausgeführt sein könnte. Dies läge im Verständnisrahmen des Wortlauts des Anspruchs 1, wenngleich mit einer solchen Anordnung ohne getrennten Lagerring die Dreheigenschaften nicht optimal wären. Im übrigen ist ein Kugellagerring nur eine bevorzugte Ausführungsform eines Lagerringes, es könnten auch Rollenlager oder sogar Gleitlager, wie im Stand der Technik bekannt, realisiert sein.

Wesentlich für die Erfindung ist, daß anstelle des im Stand der Technik verwirklichten einen Lagerringes mit entsprechend zugeordneten Laufbahnen nunmehr zwei voneinander mit radialem Abstand angeordnete Lagerringe mit entsprechend zugeordneten Laufbahnen vorgesehen sind. Diese zur Mittelachse konzentrische, aber in unterschiedlichen Abständen von der Mittelachse realisierte zweifache Abstützung des Drehtellers auf der Grundplatte ist zwar abstützungstechnisch aufwendig, führt aber gleichzeitig dazu, daß im übrigen die Materialstärke sowohl der Grundplatte als auch und insbesondere des Drehtellers drastisch verringert werden kann. Es entfallen die beim Stand der Technik wegen der überbrückung großer radialer Abstände auftretenden hohen Biegemomente, eine Kippneigung entfällt völlig. Bei hoher gewichtsmäßiger Belastbarkeit kann die erfindungsgemäße Drehtellereinrichtung folglich sehr leicht und materialsparend ausgeführt sein.

Es gibt nun viele Möglichkeiten, die Lehre der Erfindung auszugestalten und weiterzubilden, wozu auf die dem Anspruch 1 nachgeordneten Ansprüche verwiesen werden darf. Von besonderer Bedeutung ist dabei die auch für sich selbständig erfinderische Lehre des Anspruchs 9, wonach der Drehteller in Draufsicht eckig, insbesondere sechseckig, ausgeführt ist. Entgegen den im Stand der Technik bekannten Drehtellereinrichtungen mit durchweg runden Drehtellern führt ein eckiger Drehteller dazu, daß die minimale Breite durch den Außendurchmesser der kreisrunden Grundplatte bestimmt ist, wohingegen die maximale Breite durch die Diagonale zwischen zwei einander gegenüberliegenden Ecken bestimmt ist. Man kann also eine solche Drehtellereinrichtung unter Nutzung der minimalen Breite in einem Küchenschrank leicht verstauen, für auf der Drehtellereinrichtung stehende Gegenstände kann man aber die maximale Breite des Drehtellers von Ecke zu Ecke nutzen.

Im folgenden wird die Erfindung anhand einer lediglich Ausführungsbeispiele darstellenden Zeichnung näher erläutert. In der Zeichnung zeigt

Fig. 1 eine erfindungsgemäße Drehtellereinrichtung in einer Seitenansicht,

Fig. 2 die Drehtellereinrichtung aus Fig. 1 in einer Draufsicht,

Fig. 3 die Drehtellereinrichtung aus Fig. 1 in einer Ansicht von unten,

Fig. 4 die Drehtellereinrichtung aus Fig. 1 in Fig. 1 entsprechender Lage, jedoch in einem Schnitt,

Fig. 5 einen Ausschnitt aus dem Schnitt der erfindungsgemäßen Drehtellereinrichtung in Fig. 4 und

Fig. 6 in Fig. 4 entsprechender Darstellung ein Ausführungsbeispiel einer mit einem Motorantrieb ausgerüsteten erfindungsgemäßen Drehtellereinrichtung.

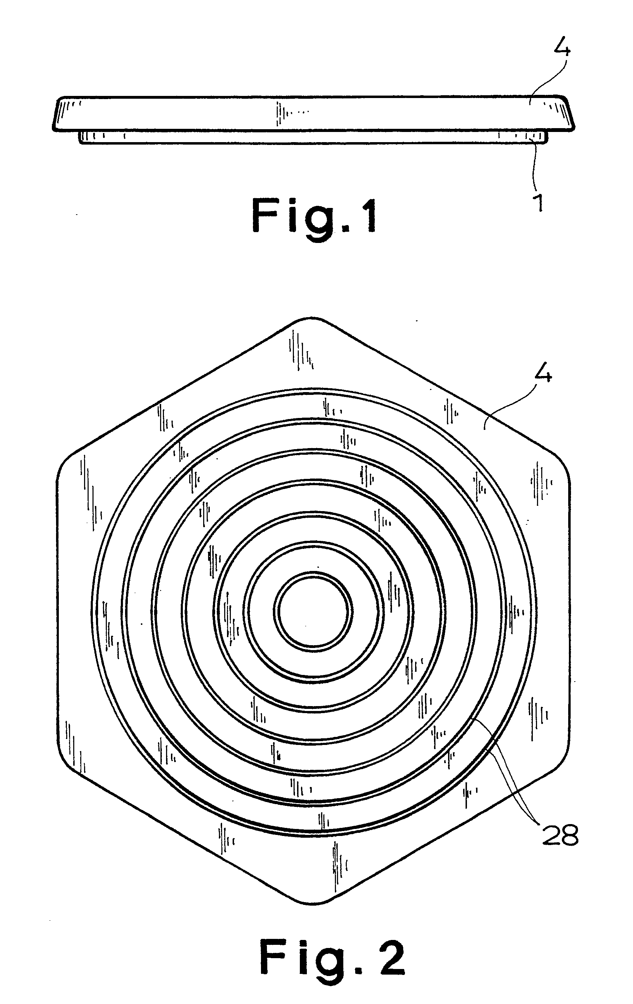

Zum Verständnis der Erfindung sind zunächst die Fig. 1, 2, 3 und 4 gemeinsam heranzuziehen. Sie zeigen eine Drehtellereinrichtung, die für Audio- und/oder Videogeräte, Leuchtstrahler, Blumentöpfe, Ausstellungsgegenstände etc. Bestimmt und geeignet ist. Im dargestellten Ausführungsbeispiel hat die Drehtellereinrichtung eine Bauhöhe von ca. 20 mm, eine minimale Breite von ca. 250 mm, eine maximale Breite von ca. 290 mm und eine Belastbarkeit von bis zu 100 kp.

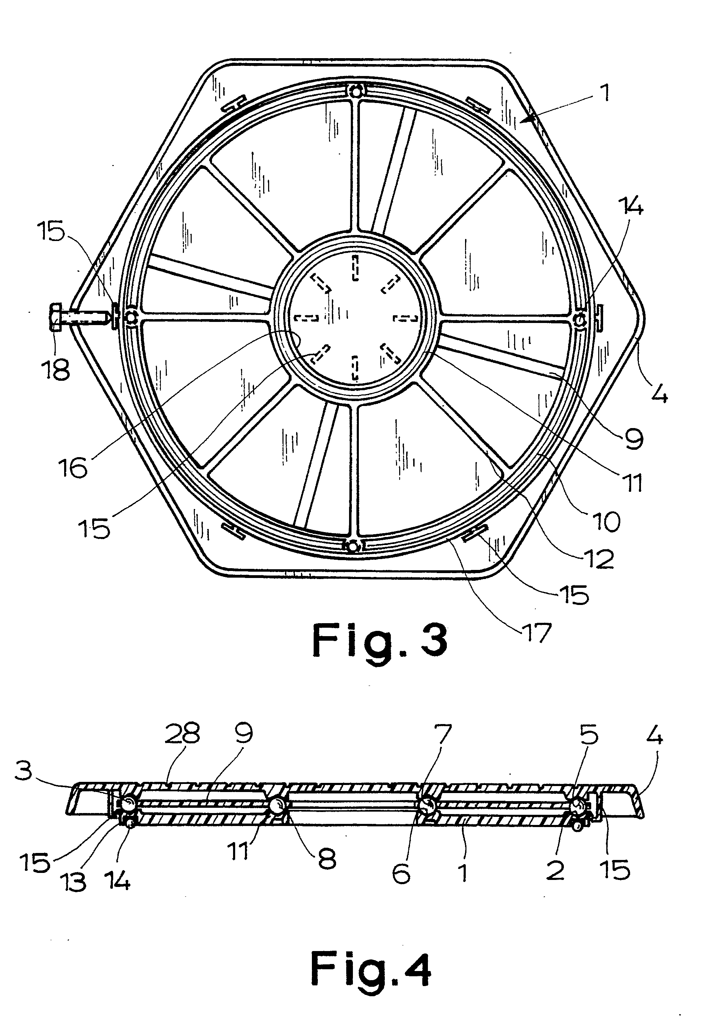

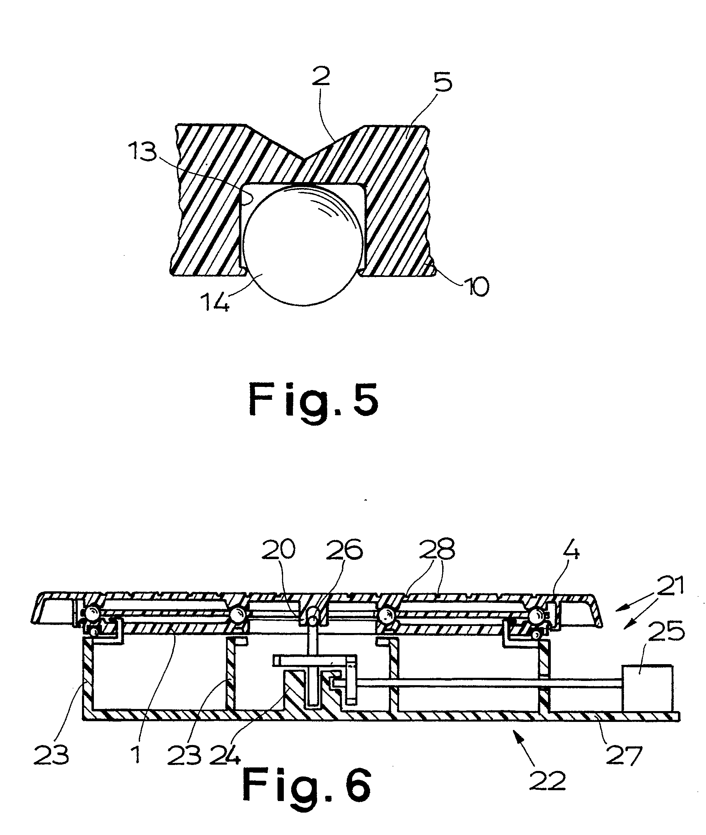

Die dargestellte Drehtellereinrichtung weist zunächst eine auf einer Standfläche anzuordnende, vorzugsweise kreisrunde Grundplatte 1 mit einer auf der Oberseite nahe dem Außenumfang verlaufenden, kreisrunden Lager-Laufbahn 2 auf. Fig. 5 zeigt einen besonders vergrößerten Ausschnitt aus dem Bereich der Lager-Laufbahn 2 an der Grundplatte 1. Auf der Laufbahn 2 ist ein hier und nach bevorzugter Lehre als Kugellagerring 3 ausgeführter Lagerring konzentrisch zur Laufbahn 2 angeordnet. Konzentrisch zur Grundplatte 1 findet man ferner einen gegenüber der Grundplatte 1 um die gemeinsame Mittelachse drehbaren Drehteller 4 mit einer auf der Unterseite nahe dem Außenumfang verlaufenden kreisrunden Lager-Laufbahn 5, was in Fig. 4 zu erkennen ist. Wie im Stand der Technik bekannt, sind die verschiedenen Teile vorzugsweise aus spritzgießfähigem Kunststoff hergestellt, so daß sie insgesamt relativ leicht und preiswert ausgeführt sein können. Die Kugeln des Kugellagerringes 3 bestehen zumeist aus Stahl. Anstelle des Kugellagerringes 3 können auch Rollenlagerringe vorgesehen sein. Überdies gilt die zuvor schon angesprochene Integrationsmöglichkeit des Kugellagerringes 3 mit einer der beiden Laufbahnen 2, 5 bei entsprechend verschlechterter Dreheigenschaft.

Aus Fig. 3 und Fig. 4 entnimmt man nun, daß gemäß der Erfindung nahe der gemeinsamen Mittelachse der verschiedenen Teile eine zweite, zur Mittelachse konzentrische Anordnung aus an der Grundplatte 1 und dem Drehteller 4 angeordneten Lager-Laufbahnen 6, 7 und dazwischen angeordneten, insbesondere als Kugellagerring 8 ausgeführtem Lagerring vorgesehen ist. Man erkennt besonders in Fig. 4 sehr schön die durch die erfindungsgemäße Konstruktion realisierte doppelte konzentrische Lagerung des Drehtellers 4, durch den die Materialstärke des Drehtellers 4 sehr gering gehalten werden kann, weil die auftretenden Spannweiten zwischen den Laufbahnen 2, 5; 6, 7 relativ gering sind. Außerdem erkennt man, daß hier die Gefahr eines Kippens der Anordnung wegen zu hoher Kippmomente sehr gering ist.

Bei der erfindungsgemäßen Drehtellereinrichtung sind zwei Kugellagerringe 8 bzw. Lagerringe notwendig. Diese kann man aus montagetechnischen und handhabungstechnischen Gründen dadurch zu einer Einheit zusammenfassen, daß man sie über im wesentlichen radial verlaufende Stege 9, hier und nach bevorzugter Lehre über vier Stege 9, miteinander verbindet. Die Stege 9 bieten kaum zusätzlichen Materialaufwand, man hat aber so insgesamt eine Einheit mit den beiden Kugellagerringen 3, 8 und den Stegen 9, die man für sich handhaben kann. Außerdem trägt diese Anordnung zu einer strukturellen Stabilisierung der Gesamtkonstruktion bei.

Schon mit der zuvor erläuterten Konstruktion mit einer evtl. durchgehenden Grundplatte 1 wird bei gewichtsmäßig hoher Belastbarkeit eine leichte Bauweise in materialsparender Ausführung realisiert. Erfindungsgemäß ist nun aber erkannt worden, daß man dies noch weiter perfektionieren kann, nämlich dadurch, daß die Grundplatte 1 von zwei kreisrunden, konzentrischen, aber radial einen erheblichen Abstand voneinander aufweisenden Tragringen 10, 11 gebildet ist und jeder Tragring 10, 11 eine Lager-Laufbahn 2, 6 aufweist. Auch hier kann man, wie schon zuvor zu den Kugellagerringen 3, 8 erläutert, die Tragringe 10, 11 miteinander über im wesentlichen radial verlaufende Stege 12 zu einer Einheit zusammenfassen. Die Grundplatte 1 wird also dann praktisch durch die Tragringe 10, 11 und die Stege 12 im Zusammenhang gebildet. Insbesondere empfiehlt es sich, aus Stabilitätsgründen sechs oder acht Stege 12 vorzusehen. Grundlage für diese Ausgestaltung der Lehre der Erfindung ist die Erkenntnis, daß eine massive und damit belastbare Ausführung der Grundplatte 1 nur im Bereich der Laufbahnen 2, 6 erforderlich ist, während an allen übrigen Stellen die Grundplatte 1 eigentlich keine Funktion hat. Folglich ist an den übrigen Stellen soweit wie möglich auf das Material der Grundplatte 1 verzichtet worden. Die Stege 12 zur Verbindung der Tragringe 10, 11 sind aber zweckmäßig, um die die Grundplatte 1 bildenden Teile als Einheit handhaben zu können.

Herstellungstechnisch zweckmäßig und materialsparend ist eine weitere Ausgestaltung, die dadurch gekennzeichnet ist, daß der Tragring 10 bzw. 11 im Querschnitt als nach unten offenes, nach oben unter Bildung der Laufbahn 2 bzw. 6 geschlossenes Hohlprofil, insbesondere U-Profil oder V-Profil ausgeführt ist. Im dargestellten Ausführungsbeispiel erkennt man insbesondere aus Fig. 3, daß beide Tragringe 10, 11 entsprechend hohlprofilartig gestaltet sind. Trotz geringen Materialaufwandes weist ein solches Hohlprofil eine völlig ausreichende Biegesteifigkeit auf. Entsprechendes gilt auch dann, wenn nur bereichsweise materialsparende Ausnehmungen vorhanden sind.

Die Fig. 3, 4 und 5 zeigen im Zusammenhang weiter, daß zumindest der äußere Tragring 10 auf der Unterseite mit mehreren, auf dem Umfang verteilt angeordneten Aufnahmekammern 13 für Lagerkörper 14 aus weichelastischem Material versehen ist. Auch der innere Tragring 11 könnte mit solchen Lagerkörpern 14 versehen sein, hier besteht aber die Notwendigkeit weniger, wie aus den nachfolgenden Erläuterungen noch deutlich werden wird.

Ein Lagerkörper 14 aus weichelastischem Material, insbesondere in Form einer Kugel aus Gummi, wie in Fig. 5 dargestellt, kann in eine entsprechend hinterschnittene Aufnahmekammer 13, wie in Fig. 5 dargestellt, eingedrückt werden, ohne daß er aus ihr wieder herausfallen kann. Er verhindert ein Verkratzen empfindlicher Tischoberflächen beim Aufsetzen und Verschieben der Drehtellereinrichtung und führt gleichzeitig dazu, daß die Drehtellereinrichtung auch im Betrieb nicht ohne weiteres seitlich verrutschen kann.

Die dargestellte Konstruktion der Aufnahmekammer 13 und Lagerkörper 14 ist insoweit noch besonders, als die Aufnahmetiefe der Lagerkörper 14 in den Aufnahmekammern 13 ein elastisches Hineindrücken der Lagerkörper 14 in die Aufnahmekammern 13 bei Überschreiten einer bestimmten Grenzbelastung des Drehtellers 4 erlaubt. Dieser Konstruktionsanweisung liegt die Erkenntnis zugrunde, daß ein Verschieben der Drehtellereinrichtung und damit ein Verkratzen einer empfindlichen Tischoberfläche zumeist am Anfang, also bei nicht belasteter Drehtellereinrichtung erfolgt. Steht die Drehtellereinrichtung erst mal belastet an dem vorgesehenen Platz, wird sie in aller Regel seitlich nicht mehr verschoben. Dann macht es nichts aus, wenn bei hoher Gewichtsbelastung der gesamte Rand des Tragringes 10 auf der Standfläche aufliegt, ohne im besonderen Maße weichelastisch und damit kratzschützend ausgerüstet zu sein. Man schafft so eine bedarfsweise sich selbständig vergrößernde Abstützfläche für den Tragring 10 auf der Standfläche. Aus diesem Grunde ist es auch für den inneren Tragring 11 nur von untergeordneter Notwendigkeit, entsprechende Lagerkörper 14 vorzusehen.

Die Fig. 4 und 5 zeigen im übrigen, daß die Laufbahnen 2, 6 bei der erfindungsgemäßen Konstruktion dreidimensional ausgeformt sind, nämlich im Querschnitt dreieckig gestaltet sind. Entsprechende Gestaltungsformen werden auch trapezförmig oder, wie im Stand der Technik, ballig gerundet. Um geometrische Überbestimmungen zu vermeiden, sollten aber die Kraftübertragungsflächen möglichst immer zu linienförmiger Belastung führen.

Auch die dargestellte, erfindungsgemäße Drehtellereinrichtung weist Maßnahmen auf, um ein seitliches Verschieben der Teile gegeneinander zu verhindern. Dabei ist selbstverständlich ein gewisses, kleines radiales Spiel stets notwendig, um eine leichte Drehbarkeit des Drehtellers 4 gegenüber der Grundplatte 1 zu gewährleisten. Es gilt zunächst in Fig. 3, daß zu diesem Zwecke Nasen 15 vorgesehen sind, die durch eine entsprechende Öffnung 16 in der Grundplatte 1, nämlich durch den offenen Innenumfang des inneren Tragringes 11, vom Drehteller 4 ausgehend axial hineinragen. Das ist für sich aus dem Stand der Technik bekannt und daher in Fig. 3 als mögliche Lösung auch nur gestrichelt dargestellt.

In dem in den Fig. 3 und 4 dargestellten Ausführungsbeispiel, und zwar insoweit, als das in durchgezogenen Linien dargestellt ist, gilt nun aber, daß die Nasen 15 am Außenumfang der äußeren Laufbahn 2 angeordnet sind. Dabei sind im hier dargestellten und insoweit bevorzugten Ausführungsbeispiel die Nasen 15 außerdem noch als federnde Rastelemente ausgebildet und hinterfassen axial entsprechend am anderen Teil angeordnete Gegenelemente, hier und nach bevorzugter Lehre eine umlaufende Rastleiste 17. Dabei liegt auch hier ein geringes Spiel, diesmal in axialer Richtung vor, damit sich keine Beeinträchtigung der Drehbarkeit des Drehtellers 4 gegenüber der Grundplatte 1 ergibt. Wenn dabei das axiale Spiel geringer ist als die wirksame Lauftiefe der dreidimensional ausgeformten Laufbahnen 2, 5; 6, 7, so ist sichergestellt, daß auch bei angehobenem Drehteller 4 die Kugellagerringe 3, 8 seitlich nicht verrutschen können. Die Nasen 15 und/oder die Rastleiste 17 können mit einander zugewandten Anlaufschrägen versehen sein, so daß durch einfaches Hineindrücken der Rastleiste 17 in die von den Nasen 15 gebildete kreisförmige Aufnahme an dem Drehteller 4 die Grundplatte 1 mit dem Drehteller 4 radial und axial verrastet werden kann. Im übrigen gilt natürlich, daß die Zuordnung von Nasen 15 und Rastleiste 17 auch genau umgekehrt sein kann. Ebenso gilt, daß die Nasen 15 in Form federnder Rastelemente durchaus auch am Innenumfang des inneren Tragringes 11, an dessen Außenumfang oder am Innenumfang des äußeren Tragringes 10 angeordnet sein können.

Fig. 3 zeigt eine weitere bevorzugte Ausführungsform dergestalt, daß der Drehtelle 4 gegenüber der Grundplatte 1 drehblockierbar ist und daß dazu, vorzugsweise, eine als federndes Rastelement ausgebildete Nase 15 an die Rastleiste 17 anpreßbar ist. Man erkennt hierzu im dargestellten Ausführungsbeispiel eine von außen her seitlich eingeschraubte Blockierschraube 18, entsprechend könnte aber auch ein Exzenterhebel arbeiten oder einfach ein Keil-Klemmstück. Alle der Drehblockierung dienenden Elemente könnten auch direkt am Tragring 10 angreifen. Man könnte auch von der Oberseite des Drehtellers 4 her einen Blockierstift in die Grundplatte 1 einfassen lassen, allerdings könnte das mit den auf dem Drehteller 4 zu plazierenden Gegenständen kollidieren.

Man erkennt, daß es sich bei der erfindungsgemäßen Drehtellereinrichtung um eine in allen Richtungen ausgefeilte, auf höchste Belastbarkeit bei geringstem Materialeinsatz und geringstem Gewicht ausgerichtete Konstruktion handelt, die folglich außerordentlich preiswert herzustellen ist. Dabei ist diese Konstruktion sehr verläßlich, außerdem formschön zu gestalten und leicht zu reinigen. Insbesondere ist die Anordnung deswegen leicht zu reinigen, weil durch die offene Gestaltung der Grundplatte 1 und der Einheit der Kugellagerringe 3, 8 sogar die Unterseite des Drehtellers 4 ohne Demontage der Grundplatte 1 erreichbar ist.

Fig. 6 zeigt ein nochmals grundlegend geändertes Ausführungsbeispiel einer erfindungsgemäßen Drehtellereinrichtung, das sich dadurch auszeichnet, daß der Drehteller einen Kupplungsansatz 20 für einen Motorantrieb 21 aufweist. Erfindungsgemäß ist nämlich erkannt worden, daß eine Drehtellereinrichtung der in Rede stehenden Art eine besondere Einsatzform dann findet, wenn der Drehteller 4 motorbetrieben ist. Beispielsweise für Ausstellungsgegenstände ist das eine zweckmäßige Variante. Das in Fig 6 dargestellte Ausführungsbeispiel zeichnet sich in diesem Zusammenhang dadurch aus, daß der Motorantrieb 21 einen Sockel 22 mit umlaufenden Abstützringen 23 für die Grundplatte 1 und einem Getriebelager 24 und einen im Sockel 22 oder neben dem Sockel 22 angeordneten elektrischen Antriebsmotor 25 aufweist. Das dargestellte Ausführungsbeispiel zeichnet sich weiter dadurch aus, daß der Kupplungsansatz 20 durch Aufsetzen der Einheit aus Grundplatte 1 und Drehteller 4 mit einem im Sockel 22 angeordneten Antriebselement 26 von selbst kuppelbar ist. Auch für die Gestaltung des Sockels 22 mit den Abstützringen 23 gilt, daß hier eine möglichst materialsparende Bauweise gewählt worden ist mit Abstützringen 23 nur dort, wo es unbedingt nötig ist und ebenfalls mit einer lediglich als Doppelring mit Verbindungsstegen ausgeführten Basisplatte 27.

Von besonderer und für sich erfinderischer und auch für sich schutzfähiger Bedeutung ist im übrigen die Formgestaltung des Drehtellers 4 der Drehtellereinrichtung. Dieser ist nämlich, wie Fig. 1 zeigt, in Draufsicht eckig, und zwar mit gerader Eckenzahl, hier und nach bevorzugter Lehre sechseckig. Das hat den Vorteil, daß durch den diagonalen Abstand der Mittelpunkte der jeweils einander gegenüberliegenden Kanten eine minimale Breite des Drehtellers 4 definiert ist, die konstruktiv nicht größer sein muß als der Aussenumfang der unverändert kreisrunden Grundplatte 1. Mit dieser minimalen Breite kann die dargestellte Drehtellereinrichtung in einem Küchenschrank platzsparend untergebracht werden. Dort ist nämlich die Breite regelmäßig das eigentliche Problem, da regelmäßig in der Tiefe genug Platz zur Verfügung steht und man ja auch in einem Küchenschrank Gegenstände hintereinander nur ungern unterbringt. Gleichwohl hat der Drehteller 4 der erfindungsgemäßen Drehtellereinrichtung als wirksame maximale Breite für einen darauf zu plazierenden Gegenstand den Diagonalabstand zweier einander gegenüberliegender Ecken des Drehtellers 4. Dieser ist wesentlich größer, die bei dem dargestellten Ausführungsbeispiel beispielhaft vorhandenen Maße sind eingangs des speziellen Teils der Beschreibung angegeben worden.

Bei der zuvor erläuterten, eckigen Gestaltung des Drehtellers 4 gewinnt man im übrigen in den Ecken Raum zur Anordnung der am Außenumfang der äußeren Laufbahn angeordneten Nasen 15, ohne die minimale Breite des Drehtellers 4 zu beeinträchtigen. In ähnlicher Weise ist auch eine ungerade Eckenzahl vorteilhaft, wenngleich das Breitenverhältnis etwas schlechter ist als bei gerader Eckenzahl.

Schließlich zeigt Fig. 2 noch die in die Oberseite des Drehtellers 4 eingelassenen konzentrischen Nuten 28. Diese Nuten 28 dienen der Aufnahme von Tropfwasser, gleichzeitig der Rutschsicherung auf dem Drehteller 4 plazierter Gegenstände und schließlich auch der Dekoration, gleichzeitig aber auch einer weiteren Materialersparnis durch strukturelle Versteifung des Drehtellers 4.

**Patentansprüche**

1. Drehtellereinrichtung für Audio- und/oder Videogeräte, Leuchtstrahler, Blumentöpfe, Ausstellungsgegenstände etc.

   mit einer auf einer Standfläche anzuordnenden, vorzugsweise kreisrunden Grundplatte (1) mit einer auf der Oberseite nahe dem Außenumfang verlaufenden, kreisrunden Lager-Laufbahn (2),

   mit einem auf der Lager-Laufbahn (2) angeordneten, konzentrischen, insbesondere als Kugellagerring (3) ausgeführten Lagerring und

   mit einem konzentrisch zur Grundplatte (1) angeordneten, gegenüber der Grundplatte (1) um die gemeinsame Mittelachse drehbaren Drehteller (4) mit einer auf der Unterseite nahe dem Außenumfang verlaufenden, kreisrunden Lager-Laufbahn (5),

   wobei die verschiedenen Teile vorzugsweise aus spritzgießfähigem Kunststoff bestehen,

   **dadurch gekennzeichnet,**

   daß nahe der gemeinsamen Mittelachse der verschiedenen Teile eine zweite, zur Mittelachse konzentrische Anordnung aus an der Grundplatte (1) und dem Drehteller (4) angeordneten Lager-Laufbahnen (6, 7) und dazwischen angeordneten, insbesondere als Kugellagerring (8) ausgeführtem Lagerring vorgesehen ist. und

   daß, vorzugsweise, die beiden Kugellagerringe (3, 8) über im wesentlichen radial verlaufende Stege (9), insbesondere über vier Stege (9), miteinander zu einer Einheit zusammengefaßt sind.

2. Drehtellereinrichtung nach Anspruch 1, dadurch gekennzeichnet, daß die Grundplatte (1) von zwei kreisrunden, konzentrischen, aber radial einen erheblichen Abstand voneinander aufweisenden Tragringen (10, 11) gebildet ist und jeder Tragring (10, 11) eine Lager-Laufbahn (2, 6) aufweist und daß, vorzugsweise, die Tragringe (10, 11) miteinander über im wesentlichen radial verlaufende Stege (12), insbesondere sechs oder acht Stege (12), zu einer Einheit zusammengefaßt sind.

3. Drehtellereinrichtung nach Anspruch 2, dadurch gekennzeichnet, daß der Tragring (10 bzw. 11) im Querschnitt als nach unten offenes, nach oben unter Bildung der Laufbahn (2 bzw. 6) geschlossenes Hohlprofil, insbesondere U-Profil oder V-Profil ausgeführt ist.

4. Drehtellereinrichtung nach Anspruch 2 oder 3, dadurch gekennzeichnet, daß zumindest der äußere Tragring (10) auf der Unterseite mit mehreren, auf dem Umfang verteilt angeordneten Aufnahmekammern (13) für Lagerkörper (14) aus weichelastischem Material versehen ist und daß, vorzugsweise, die Aufnahmetiefe der Lagerkörper (14) in den Aufnahmekammern (13) ein elastisches Hineindrücken der Lagerkörper (14) in die Aufnahmekammern (13) bei Überschreiten einer bestimmten Grenzbelastung des Drehtellers (4) erlaubt.

5. Drehtellereinrichtung nach einem der Ansprüche 1 bis 4, wobei am Drehteller (4) oder an der Grundplatte (1), ggf. durch eine entsprechende Öffnung (16), in die Ebene des jeweils anderen Teils axial hineinragenden Nasen (15) vorgesehen sind, die ein seitliches Verschieben der Teile gegeneinander im wesentlichen verhindern, dadurch gekennzeichnet, daß die Nasen (15) nur oder auch am Außenumfang der äußeren Laufbahn (2) angeordnet sind und/oder daß die Nasen (15) als federnde Rastelemente ausgebildet sind und entsprechend am anderen Teil angeordnete Gegenelemente, insbesondere eine umlaufende Rastleiste (17), vorzugsweise mit geringem axialen Spiel, axial hinterfassen und, vorzugsweise, das axiale Spiel geringer ist als die wirksame Lauftiefe der dreidimensional ausgeformten Laufbahnen (2, 5;6, 7).

6. Drehtellereinrichtung nach einem der Ansprüche 1 bis 5, dadurch gekennzeichnet, daß der Drehteller (4) gegenüber der Grundplatte (1) drehblockierbar ist und daß dazu, vorzugsweise, eine als federndes Rastelement ausgebildete Nase (15) an die Rastleiste (17) anpreßbar ist.

7. Drehtellereinrichtung nach einem der Ansprüche 1 bis 6, dadurch gekennzeichnet, daß der Drehteller (4), insbesondere mittig, einen Kupplungsansatz (20) für einen Motorantrieb (21) aufweist, daß, vorzugsweise, der Motorantrieb (21) einen Sockel (22) mit umlaufenden Abstützringen (23) für die Grundplatte (1) und einem Getriebelager (24) und einen im Sockel (22) oder neben dem Sockel (22) angeordneten elektrischen Antriebsmotor (25) aufweist und daß, vorzugsweise der Kupplungsansatz (20) durch Aufsetzen der Einheit aus Grundplatte (1) und Drehteller (4) mit einem im Sockel (22) angeordneten Abtriebselement (26) kuppelbar ist.

8. Drehtellereinrichtung nach einem der Ansprüche 1 bis 7, dadurch gekennzeichnet, daß in die Oberseite des Drehtellers (4) mehrere konzentrische Nuten (28) eingelassen sind.

9. Drehtellereinrichtung, insbesondere nach einem der Ansprüche 1 bis 8, dadurch gekennzeichnet, daß der Drehteller (4) in Draufsicht eckig, vorzugsweise mit gerader Eckenzahl, insbesondere sechseckig ausgeführt ist.

10. Drehtellereinrichtung nach Anspruch 9, dadurch gekennzeichnet, daß die am Außenumfang der äußeren Laufbahn (2) angeordneten Nasen (15) in den Ecken angeordnet sind und, vorzugsweise, daß in jeder Ecke eine Nase (15) angeordnet ist.

# Fig.1

# Fig. 2

# Fig. 3

# Fig.4

# Fig. 5

# Fig. 6

Europäisches
Patentamt

# EUROPÄISCHER
# RECHERCHENBERICHT

Nummer der Anmeldung

**EP 90 11 9280**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,Y | DE-U-9 002 638 (DANIEL S.R.L.) <br> * Seite 3, Absatz 7 - Seite 5, Absatz 6; Abbildungen 1,2 * <br> — — — | 1,2,6,7,9 | A 47 G 23/08 <br> F 16 M 11/08 |
| Y | US-A-4 411 395 (CHARLES STEFFENS) <br> * Spalte 2, Zeile 55 - Spalte 3, Zeile 24; Abbildungen 1,2,5 * <br> — — — | 6 | |
| Y | US-A-4 905 543 (SOO I. CHOI) <br> * Spalte 2, Zeile 50 - Spalte 5, Zeile 7; Abbildungen 2-4 * <br> — — — | 7 | |
| Y | FR-A-7 685 91 (EDOUARD FAURE) <br> * das ganze Dokument * <br> — — — | 9 | |
| A | US-A-4 635 894 (GREGG J. SAMMONS) <br> * Spalte 3, Zeile 20 - Spalte 4, Zeile 8; Abbildungen 5-8 * <br> — — — | 1-3 | |
| D,A | DE-A-3 246 835 (THERMOHAÜSER ERWIN BUSCH GMBH) <br> * Seite 6, Absatz 5 - Seite 7, Absatz 2; Abbildungen 1,2 * <br> — — — | 1,5 | |
| A | GB-A-2 171 470 (WILLIAM HARRY NELSON) <br> * Seite 1, Zeile 79 - Seite 2, Zeile 58; Abbildungen 1-5 * <br> — — — | 1,7 | **RECHERCHIERTE SACHGEBIETE (Int. Cl.5)** |
| A | FR-A-2 008 967 (SCHOTTL LORENTZ) <br> * Seite 4, Zeile 6 - Seite 4, Zeile 18; Abbildungen 1,2 * <br> — — — | 2 | A 47 G <br> F 16 M |
| A | DE-C-5 803 99 (ERNST LEITZ GMBH) <br> * Seite 2, Spalte 1, Zeile 1 - Seite 2, Spalte 1, Zeile 7; Abbildungen 1-4 * <br> — — — | 5 | |
| A | US-A-4 114 541 (ELMER R. WEDDENDORF) <br> * Spalte 4, Zeile 29 - Spalte 5, Zeile 29; Abbildungen 1-3 * <br> — — — — | 7 | |

Der vorliegende Recherchenbericht wurde für alle Patentansprüche erstellt

| Recherchenort | Abschlußdatum der Recherche | Prüfer |
|---|---|---|
| Den Haag | 11 September 91 | VISTISEN L.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
------------------------------------------------------------
& : Mitglied der gleichen Patentfamilie, übereinstimmendes Dokument